Europäisches Patentamt

European Patent Office

Office européen des brevets

(11) Numéro de publication: **0 304 670 B1**

⑫ **FASCICULE  DE  BREVET  EUROPEEN**

(45) Date de publication de fascicule du brevet: **11.03.92**  (51) Int. Cl.⁵: **B62K  21/00**

(21) Numéro de dépôt: **88112404.4**

(22) Date de dépôt: **30.07.88**

---

(54) **Direction pour véhicule à moteur.**

---

(30) Priorité: **05.08.87 CH 3007/87**

(43) Date de publication de la demande:
**01.03.89 Bulletin  89/09**

(45) Mention de la délivrance du brevet:
**11.03.92 Bulletin  92/11**

(84) Etats contractants désignés:
**BE DE ES FR GB IT NL**

(56) Documents cités:
**DE-A- 3 537 522**
**FR-A- 2 514 715**
**US-A- 4 526 249**

(73) Titulaire: **Vuagnat, Eric**
**Carré d'Aval**
**CH-1252 Meinier(CH)**

(72) Inventeur: **Vuagnat, Eric**
**Carré d'Aval**
**CH-1252 Meinier(CH)**

(74) Mandataire: **Micheli & Cie**
**Rue de Genève 122, Case Postale 61**
**CH-1226 Genève-Thonex(CH)**

Rank Xerox (UK) Business Services

## Description

La présente invention a pour objet une direction pour véhicule à moteur et plus particulièrement pour motocyclettes, side-cars et tri-cars, comme précisé dans la première partie de la revendication 1 (US-A-4 526 249).

Lorsque l'on utilisait des fourches télescopiques sur les motocycles et les side-cars comme suspension avant il était relativement facile par une liaison directe et monolytique entre le guidon et le moyeu de la roue avant de réaliser une direction précise, sans jeu et sans mouvements parasitaires induits.

Pour les machines de course notamment on a été amené à utiliser des pneumatiques très larges et à réaliser des suspensions à trapèze ou parallèlograme déformables pour augmenter la tenue de route et diminuer lors du freinage le report du poids sur la roue avant. Ce faisant il n'était plus possible de réaliser une direction monolytique et différents systèmes ont été mis au point permettant un montage en porte à faux de la roue avant et le déplacement latéral de la liaison, ou d'une partie au moins de celle-ci, entre le moyeu de la roue et le guidon pour passer à côté des roues larges. Ces laisons présentant obligatoirement une ou plusieurs articulations, le guidon étant pivoté sur le châssis de la machine tandis que la roue est elle montée sur ce châssis par l'intermédiaire de la suspension.

Dans toute les directions de ce type actuellement existantes on est confronté en courbe au phénomène dit de "bracage induit" c'est à dire que si la suspension travaille en courbe les déplacements ainsi provoqués entraînent une oscillation du guidon autour de son point de pivotement ce qui est très gênant pour le pilote. Généralement les pilotes maintiennent le guidon fortement en position de braquage dans les courbes, l'empêchant d'osciller, mais alors c'est la roue qui, de par les mouvements de la suspension, subit des oscillations modifiant la position de son plan provoquant des modifications de la trajectoire et une oscillation de toute la machine. La vitesse en courbe est de ce fait limitée car sinon la sortie de route ou la chute est inévitable.

Les demandes interférantes EP-A-1.235.040 et EP-A-0.236.196 ainsi que le brevet US-A-4.526.249 divulguent des directions pour motocycles comportant un guidon pivoté sur le châssis de la machine relié à un support de palier de roue avant lui-même relié par une suspension au châssis de la machine également.

Dans la demande EP-A-0.235.040 la liaison reliant le guidon au support du palier avant comporte deux biellettes articulées par une extrémité l'une sur l'autre et par l'autre extrémité sur le guidon respectivement le support de palier par un cardan.

Dans la demande EP-A-0.236.196 la liaison reliant le guidon au support de palier comporte d'une part une liaison télescopique et d'autre part, deux biellettes articulées entre elles et sur le guidon respectivement ledit support de palier.

Dans le brevet US-A-4.526.249, la liaison reliant le guidon au support de palier comporte une barre télescopique, articulée à chacune de ses extrémités par un cardan sur le guidon respectivement le support du palier.

Toutes ces liaisons font intervenir deux ou plusieurs articulations et permettent une modification de la distance séparant le guidon du support du palier lorsque la suspension du véhicule travaille ce qui rend le pilotage du véhicule difficile.

La présente invention a pour objet une direction pour véhicule à moteur, notamment pour motocycles et side-cars, tendant à obvier aux inconvénients précités et qui présente les caractéristiques énumérées à la revendication 1.

Le dessin annexé illustre schématiquement et à titre d'exemple une forme d'exécution particulière de la direction selon l'invention.

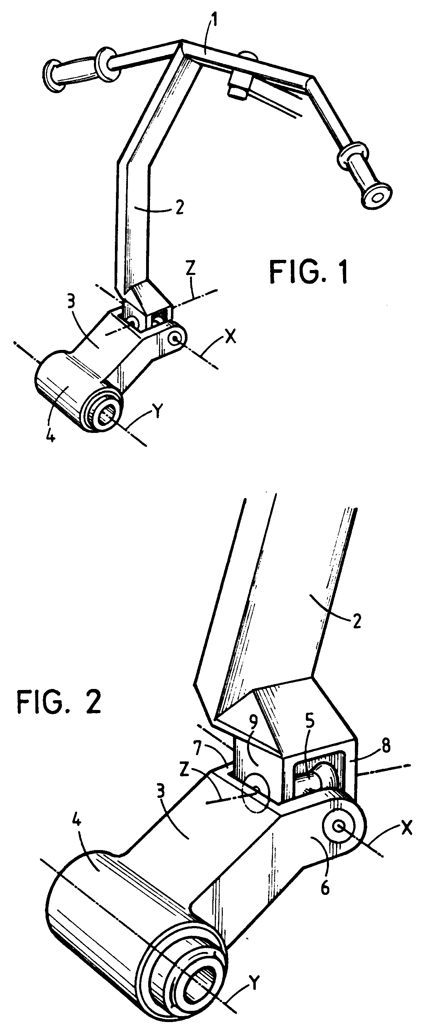

La figure 1 en est une vue schématique en perspective.

La figure 2 en est une vue partielle à plus grande échelle également en perspective.

La figure 3 est une vue en plan de la pièce recevant la fusée de la roue.

La figure 4 est une vue partielle en plan et partiellement coupée de la pièce solidaire du guidon.

La figure 5 est une vue en perspective d'une seconde forme d'exécution de la direction selon l'invention.

La direction illustrée comporte un guidon 1 destiné à être pivoté sans jeu sur une partie du châssis du véhicule à moteur, particulièrement d'un motocycle, d'un side-car ou d'un tri-car, solidaire d'une tige de direction 2 généralement coudée ou déportée latéralement pour passer d'un côté de la roue avant du véhicule. Cette tige de direction 2 est accouplée à un support 3 solidaire du palier 4 recevant la fusée de la roue. Ce support 3 est relié au châssis de la machine par l'intermédiaire de la suspension du véhicule. L'accouplement entre la tige de direction 2 et le support 3 est constitué par un cadran à croisillon 5 dont les branches sont orthogonales et pivotées sur l'extrémité en forme de fourche 6,7 du support 3 respectivement sur l'extrémité en forme de fourche 8,9 de la barre de direction 2.

Pour éviter tout braquage induit lors du débattement de la suspension il faut que l'axe d'articulation X du croisillon 5 sur la fourche 6,7 du support 3 soit contenu dans un plan parallèle à l'axe Y du palier 4 donc à l'axe de rotation de la roue. Par voie de conséquence l'axe Z de pivotement du croisillon 5 sur les fourches 8,9 de la barre de direction 2 se trouve situé dans un plan perpendiculaire à l'axe Y du palier 4.

Dans la forme d'exécution préférée illustrée au dessin l'axe X de pivotement du croisillon 5 sur le support 3 est parallèle à l'axe Y du palier 4.

Dans une variante on peut concevoir que les branches du croisillon 5 forment entre elles un angle différent de 90°.

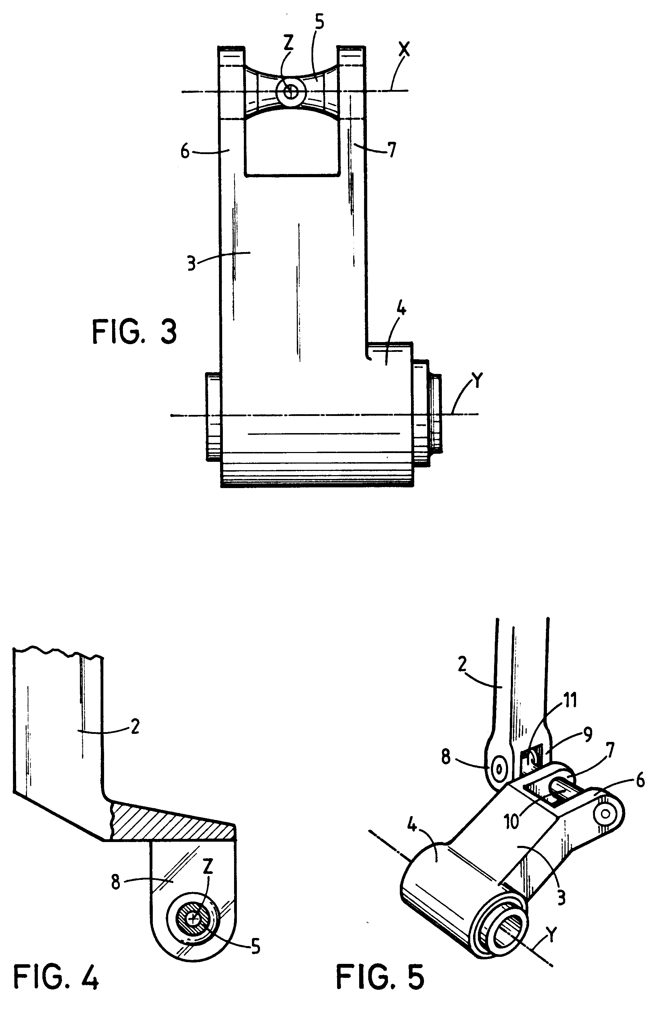

Dans la seconde forme d'exécution de la direction illustrée à la figure 5, le cardan reliant la barre de direction 2 au support 3 du palier 4, est remplacé par une double articulation. Cette double articulation comporte un axe 10 pivoté dans la fourche 6,7 du support 3, cet axe s'étendant latéralement d'un côté hors de cette fourche 6,7. L'extrémité de cet axe 10 est solidaire d'un pivot 11 formant un angle avec l'axe 10, de préférence de 90°, qui est pivoté dans la fourche 8,9 de la barre de direction 2 solidaire du guidon 1.

Dans cette réalisation, l'axe 10 est également situé dans un plan parallèle à l'axe Y du palier 4, de préférence il est parallèle à cet axe Y. Le résultat de cette double articulation reliant le support 3 à la barre de direction 2 est identique à la liaison par cardan précédemment décrite, elle permet toutefois de déporter la barre de direction 2 latéralement ce qui dans certaines réalisations peut présenter un avantage et faciliter son positionnement par rapport aux autres éléments, suspension, roues, châssis du véhicule.

Dans une variante non illustrée l'axe 10 pourrait comporter une extension perpendiculaire , soit centrée sur le support 3, soit décalée latéralement.

L'extrêmité de cette extension présenterait un axe 11 perpendiculaire à l'axe Y sur lequel serait articulé le bras 2 et donc le guidon 1.

D'une façon générale on obtient la suppression du "braquage induit" en réalisant une liaison mécanique entre le guidon 1 et le support 3 du palier 4 de la roue qui comprend une double articulaton dont un des axes de pivotement est contenu dans un plan parallèle à l'axe dudit palier 4.

## Revendications

1.   Direction pour véhicule à moteur, notamment motocycles, side-cars et tri-cars, comprenant un guidon (1) pivoté sans jeu sur le châssis du véhicule, relié au support (3) du palier (4) de la roue avant, support (3) relié au châssis du véhicule par l'intermédiaire de la suspension, caractérisée par le fait que le guidon (1) est relié mécaniquement au support (3) du palier (4) par une barre de direction monolithique (2) dont l'une des extrémités est fixée rigidement au guidon (1) et dont l'autre extrémité est reliée au support (3) de palier par une seule double articulation (X;Z) dont un premier axe de pivotement (X) est situé dans un plan parallèle à l'axe (Y) du palier (4).

2.   Direction selon la revendication 1, caractérisée par le fait que le premier axe de pivotement (X) de la double articulation est parallèle à l'axe (Y) du palier (4).

3.   Direction selon la revendication 1 ou la revendication 2, caractérisée par le fait que le premier (X) et le second (Z) axes de pivotement sont perpendiculaires entre eux.

4.   Direction selon la revendication 3, caractérisée par le fait que la double articulation (X;Z) est constituée par un cardan à croisillon (5), dont les branches sont orthogonales.

## Claims

1.   Steering device for motor vehicle, more particularly for motor cycles, side-cars, three wheels vehicles, comprising a handle bar (1) pivoted without play on the frame of the vehicle, connected to a support (3) of the bearing (4) of the front wheel, support (3) which is connected to the frame of the vehicle through the intermediary of the suspension, characterized by the fact that the handle bar (1) is mechanically linked to the support (3) of the bearing (4) through a monolithic steering rod (2) one end of which is rigidly fast with the handle bar (1) and the other end of which is linked to the support (3) of the bearing through only one double articulation (X;Z) a first pivotement axis (X) of which is located in a plan parallel to the axis (Y) of the bearing (4).

2.   Steering device as claimed in claim 1, characterized by the fact that the first axis of pivotement (X) of the double articulation is parallel to the axis (Y) of the bearing (4).

3.   Steering device according to claim 1 or claim 2, characterized by the fact that the first (X) and the second axes (2) of pivotement are perpendicular to one to the other.

4.   Steering device according to claim 3, characterized by the fact that the double articulation (X;Z) is formed by an universal joint having a cross member (5), the arms of which are orthogonal to each other.

## Patentansprüche

1.   Lenkung für Kraftfahrzeuge, insbesondere Motorräder, Beiwagenmaschinen und Dreiradkraftfahrzeuge, mit einem Lenker (1), der spielfrei im Fahrzeugrahmen drehbar gelagert und mit einem Radlagerträger (3, 4) des Vorderrades verbunden ist, wobei der Radlagerträger über die Radaufhängung mit dem Fahrzeugrahmen verbunden ist, dadurch gekennzeichnet, daß der Lenker (1) mechanisch mit dem Radlagerträger (3, 4) durch eine starre Lenkstange (2) verbunden ist, deren eines Ende starr am Lenker (1) befestigt ist und deren anderes Ende mit dem Radlagerträger (3, 4) mittels eines einzigen Doppelgelenks (X; Y) verbunden ist, dessen erste Schwenkachse (X) in einer Ebene parallel zur Achse (Y) des Lagers (4) angeordnet ist.

2. Lenkung nach Anspruch 1, dadurch gekennzeichnet, daß die erste Schwenkachse (X) des Doppelgelenks parallel zur Achse (Y) des Lagers (4) ist.

3. Lenkung nach Anspruch 1 oder 2, dadurch gekennzeichnet, daß die erste Schwenkachse (X) und die zweite Schwenkachse (Z) senkrecht zueinander stehen.

4. Lenkung nach Anspruch 3, dadurch gekennzeichnet, daß das Doppelgelenk (X; Z) durch ein Kardan-Kreuzgelenk (5) gebildet ist, dessen Achsen senkrecht zueinander stehen.

FIG. 1

FIG. 2

FIG. 3

FIG. 4

FIG. 5